Europäisches Patentamt

European Patent Office

Office européen des brevets

(11) Veröffentlichungsnummer : **0 225 558**
**B1**

# (12) EUROPÄISCHE PATENTSCHRIFT

(45) Veröffentlichungstag der Patentschrift :
09.08.89

(21) Anmeldenummer : 86116558.7

(22) Anmeldetag : 28.11.86

(51) Int. Cl.⁴ : **C 03 C 17/02, C 03 C 21/00,**
**G 02 B 6/12, G 03 F 7/26**

(54) Verfahren zur Herstellung von integriert-optischen Strukturen in Glas.

(30) Priorität : 05.12.85 DE 3543002

(43) Veröffentlichungstag der Anmeldung :
16.06.87 Patentblatt 87/25

(45) Bekanntmachung des Hinweises auf die Patenterteilung : 09.08.89 Patentblatt 89/32

(84) Benannte Vertragsstaaten :
AT BE CH DE ES FR GB GR IT LI LU NL SE

(56) Entgegenhaltungen :
DE—A— 2 808 457
DE—A— 3 246 444
US—A— 4 400 052

(73) Patentinhaber : Bodenseewerk Gerätetechnik GmbH
Alte Nussdorfer Strasse 15 Postfach 1120
D-7770 Überlingen/Bodensee (DE)

(72) Erfinder : Bernard, Walter, Dr.
Allmendweg 6
D-7758 Meersburg (DE)
Erfinder : Langner, Klaus
Alte Dorfstrasse 61
D-7770 Überlingen 12 (DE)
Erfinder : Schwarz, Karl Hans
Hofäckerstrasse 8
D-7776 Owingen (DE)

(74) Vertreter : Weisse, Jürgen, Dipl.-Phys. et al
Patentanwälte Dipl.-Phys. Jürgen Weisse Dipl.-Chem.
Dr. Rudolf Wolgast Bökenbusch 41 Postfach 11 03 86
D-5620 Velbert 11 Langenberg (DE)

EP 0 225 558 B1

## Beschreibung

### Technisches Gebiet

Die Erfindung betrifft ein Verfahren zur Herstellung von integriert-optischen Strukturen in Glas mit den Verfahrensschritten

(a) Beschichten eines Substrats mit einer Glasschicht, deren Brechungsindex ($n_2$) höher ist als der des Substrats,

(b) Aufbringen einer Maske auf diese Glasschicht, wobei diese Maske vorgegebene erste Bereiche der Oberfläche der Glasschicht, die dem herzustellenden Wellenleiter entsprechen, abdeckt und die übrigen, zweiten Bereiche dieser Oberfläche freiläßt,

(c) Behandlung der Glasschicht in den besagten zweiten Bereichen.

Insbesondere betrifft die Erfindung ein Verfahren zur Herstellung von optischen Wellenleitern in planaren Glassubstraten. Solche Wellenleiter haben vielfältige Anwendungen. Ein Beispiel für eine solche Anwendung ist ein optischer Drehgeschwindigkeitssensor unter Ausnutzung des Sagnac-Effects. Es wird dabei eine Schleife eines optischen Wellenleiters gebildet. In diese Schleife werden von einem Laser Lichtbündel eingekoppelt, von denen das eine die Schleife im Uhrzeigersinn und das andere die Schleife entgegen dem Uhrzeigersinn durchläuft. Wenn der Wellenleiter eine Drehbewegung um eine zu der Fläche der Schleife senkrechte Achse ausführt, verschieben sich die Frequenzen der « rechtsherum » und « linksherum » laufenden Lichtbündel gegeneinander. Die durch Überlagerung ausgekoppelter Teillichtbündel erhaltene Schwebungsfrequenz ist proportional der Drehgeschwindigkeit.

Optische Wellenleiter der vorliegenden Art sind jedoch auch anwendbar bei anderen Möglichkeiten der optischen Signalverarbeitung wie Verzweigungen, Schaltern, Filtern, Modulation, Korrelation, Pulskompression, Sensorik usw.

Der Brechungsindex eines solchen Wellenleiters muß höher sein als der seiner Umgebung, so daß wie bei jedem Lichtleiter, an der Grenzfläche eine Totalreflexion auftritt. Es müssen also in einem planaren Glassubstrat Bereiche mit einem höheren Brechungsindex erzeugt werden, welche den Wellenleiter oder ein sonstiges integriertes optisches Element darstellen.

### Zugrundeliegender Stand der Technik

Ein Verfahren der eingangs genannten Art ist bekannt durch die DE-A-28 08 457.

Durch die DE-A-28 08 457 ist ein Verfahren zur Herstellung einer Wellenleiterstruktur bekannt, bei welchem auf ein Substrat eine Glasschicht aufgebracht wird, deren Brechungsindex höher ist als der des Substrates. Auf diese Glasschicht wird eine Maske aufgebracht. Diese Maske deckt vorgegebene erste Bereiche der Oberfläche der Glasschicht, die dem herzustellenden Wellenleiter entsprechen, ab und läßt die übrigen, zweiten Bereiche dieser Oberfläche frei. Die Glasschicht in den besagten zweiten Bereichen wird einer Behandlung unterworfen.

Bei der DE-A-28 04 457 wird ein Glas verwendet, welches in einem kurzwelligen Wellenlängenbereich oberhalb des Wellenlängenbereichs der später durch die Wellenleiterstruktur zu leitenden Strahlung photosensible Eigenschaften aufweist. Die Behandlung der Glasschicht in den von der Maske freigelassenen zweiten Bereichen der Oberfläche besteht in einer Bestrahlung mit Licht des besagten kurzwelligen Wellenlängenbereiches, anschließender Temperung und Behandlung mit einer Ätzlösung. Durch die Bestrahlung werden metallische Keime gebildet, die bei der Temperung das sie umgebende Glas zur Kristallisation anregen. Die so gebildete belichtete und kristallisierte Phase ist bei der Behandlung mit Ätzlösung wesentlich leichter löslich als das von der Maske abgedeckte, unbelichtete Glas. Nach dem Behandeln mit der Ätzlösung ergeben sich daher auf dem Substrat nach Auflösen der « zweiten » Bereiche die ersten Bereiche als reliefartige Wellenleiterstruktur. Diese Struktur kann dann wieder mit einer weiteren Schicht von geringerem Brechungsindex überzogen werden.

Ein ähnliches Verfahren zeigt die EP-A-0 140 431.

Umgekehrt zeigt die DE-A-30 11 160 in Verfahren zur optischen Wellenleiteranordnung, bei welchem auf ein Substrat eine Schicht eines organischen, photoaktiven Stoffes aufgebracht wird, der polymetrisierbar ist und im polymetrisierten Zustand ein wellenleitendes Material bildet. Eine Maske definiert die Gestalt der ebenen Wellenleiteranordnung, und zwar hier durch die freigelassenen Bereiche der Oberfläche. Die Schicht wird durch diese Maske hindurch mit einer die Polymerisation bewirkenden UV-Strahlung bestrahlt. Die unbelichteten, nicht polymerisierten Bereiche der Schicht werden durch Entwickeln entfernt.

Die US-A-3 873 339, die US-A-3 934 061 und die DE-A-2 313 207 zeigen Verfahren, bei denen auf einen Teil der glatten Oberfläche eines Glassubstrats eine erste Glasschicht mit größerem Brechungsindex aufgebracht wird. Auf diese erste Glasschicht wird als Überzug eine zweite Glasschicht mit wieder geringerem Brechungsindex aufgebracht.

Bei dem Verfahren nach der DE-A-3 047 589 wird ebenfalls auf ein Substrat eine erste, hier durchgehende Glasschicht aufgebracht. Die Wellenleiterstruktur wird durch eine Maske und durch Wegätzen der freiliegenden Bereiche dieser Glasschicht erzeugt. Diese erste Glasschicht mit der Wellenleiterstruktur wird wie bei der US-A-3 873 339 mit einer zweiten Glasschicht von geringerem Brechungsindex überzogen.

Die geschilderten bekannten Verfahren sind technisch aufwendig. Sie sind teils an die Verwendung bestimmter, photosensibler Gläser oder polymerisierbarer Kunststoffe gebunden. Es müssen nacheinander mehrere Glasschichten aufgebracht werden, um die Wellenleiterstrukturewn von höherem Brechungsindex in Glas von gerin- gerem Brechungsindex einzubetten.

Ein anderes bekanntes Verfahren zur Herstellung von dämpfungsarmen Wellenleitern in Glassubstraten beruht darauf, daß durch Ionenau- stausch im Bereich des Wellenleiters ein gegenüber dem übrigen Glassubstrat erhöhter Brechungsindex erzeugt wird. Es wird also die Oberfläche des Glassubstrats durch eine Maske abgedeckt. Diese Maske läßt die dem gewünschten Wellenleiter entsprechenden Bereiche frei. In die- sen Bereichen wird durch Ionenaustausch dann der Brechungsindex des Glassubstrats erhöht.

Dieses bekannte Verfahren weist verschiedene Nachteile auf. Es wird hierdurch in dem Bereich, der die optische Welle führen soll, lokal eine hohe mechanische Spannung erzeugt. Durch diese Spannung wird gerade zum Teil die Wellenführung bewirkt. Dadurch läßt sich aber der Bereich der Wellenführung und das Brechungsindexprofil nicht genau definieren. Da das Glas als unterkühlte Schmelze unter dem Einfluß ständiger mechanischer Spannungen fließt, ist nur eine geringe zeitliche Stabilität der so erhaltenen optischen Wellenleiter zu erwarten. Ferner neigt die Glaso- berfläche im ausgetauschten Bereich aufgrund der mechanischen Spannungen zu Rißbildungen verschiedenen Grades, welche die Dämpfung der Wellenleiter drastisch erhöhen.

Es sind Verfahren bekannt, durch Temper- oder Rücktauschprozesse die Oberflächenspannungen der Gläser zu reduzieren und die Wellenleiter in dem Glassubstrat zu « vergraben ». Dadurch werden Spannungen abgebaut und die Wellenlei- tung wird in oberflächenfernere Bereiche des Glassubstrats verlegt, wodurch der Einfluß von Oberflächenfehlern durch Politur, Mikrorisse, Kontamination oder ähnliches ausgeschaltet wird. Dieser Prozeß ist jedoch nur ungenügend steuerbar. Dadurch kann die Präzision der Wellenführung, wie sie für gewisse Anwendungen unbedingt erforderlich ist, nicht oder nicht reproduzierbar erreicht werden.

Es ist weiterhin bekannt, den Brechungsindex von Oberflächenschichten durch Auslaugprozesse zu vermindern. Solche Verfahren verwendet man zur Reflexverminderung von Glasoberflächen (DE-B-821 828 oder das Buch von Frischat « Ionic Fiffusion in Oxide Glasses », Seite 88ff).

Durch die EP-A1-0 106 752 ist ein Verfahren zur Herstellung von Wellenleitern bekannt, bei wel- chem auf ein Substrat mit einem relativ niedrigen Brechungsindex eine Schicht mit einem relativ hohen Brechungsindex aufgebracht wird. Auf diese Schicht mit relativ hohem Brechungsindex wird wiederum eine Schicht mit niedrigerem Brechungsindex aufgebracht. Längs der Begrenzung von herzustellenden Wellenleitern werden dann in der Schicht mit hohem Brechungsindex streifenartige Zonen von geringerem Brechungsindex erzeugt, beispielsweise durch Laser oder Elektronenstrahlen. Das ist sehr aufwendig und erfordert auf jeden Fall das Aufbringen von zwei verschiedenen Schichten auf das Substrat.

### Offenbarung der Erfindung

Der Erfindung liegt die Aufgabe zugrunde, ein Verfahren zur Herstellung von integriert-optischen Strukturen in Glas, insbesondere Wellenlei- tern, zu schaffen, welches unter Vermeidung der vorstehend geschilderten Nachteile eine reproduzierbare Herstellung der Strukturen in einem Glassubstrat unter Anwendung beherrschbarer Verfahrensschritte gestattet.

Insbesondere soll nur eine Glasschicht auf das Substrat aufgebracht werden.

Erfindungsgemäß wird diese Aufgabe bei einem Verfahren der eingangs genannten Art dadurch gelöst, daß

(d) die Behandlung der Glasschicht in den zweiten Bereichen eine Behandlung zur Verminderung des Brechungsindex der im übrigen mechanisch unveränderten Glasschicht ist,

(e) nach der Behandlung der zweiten Bereiche die Maske entfernt wird und

(f) anschließend eine weitere Behandlung zur Verminderung des Brechungsindex in einer gegenüber der Dicke der Glasschicht dünnen Oberflächenschicht der ersten Bereiche stattfindet.

Bei dem erfindungsgemäßen Verfahren wird zunächst auf das Substrat eine Glasschicht aufgebracht, deren Brechungsindex höher ist als der des Substrats. Hierfür sind verschiedene bekann- te Verfahren anwendbar, beispielsweise Aufdamp- fen, Sputtern, CVD-Verfahren mit anschließender Kolabierung, Glasabscheidung aus metallorga- nischen Lösungen mit anschließendem Temper- prozeß, Aufschmelzen oder Ionenaustausch. Da- nach wird eine Maske aufgebracht, die nicht, wie bei den bekannten Verfahren, die Bereiche der herzustellenden Wellenleiter freiläßt, sondern diese Bereiche — ähnlich wie bei der Herstellung von Leiterbahnen bei gedruckten Schaltungen — abdeckt. Auch hierfür sind Verfahren bekannt. Es können Masken aus Metall (Aluminium, Chrom, Titan), aus dielektrischen Materialien (z. B. $Al_2 O_3$) oder aus Photoresisten verwendet werden. Nach Aufbringen dieser Maske erfolgt eine Ver- minderung des Brechungsindex der aufgebrach- ten Glasschicht. Es erfolgt also eine Verminderung des Brechungsindex in den Bereichen außerhalb der vorgesehenen Wellenleiter gegenüber dem vorhergehenden Zustand und nicht wie bei dem bekannten Verfahren eine Erhöhung des Brechungsindex nur im Bereich der Wellenleiter. Verfahren zur Verminderung des Brechungsindex von Oberflächenschichten sind bekannt. Beispielsweise kann diese Verminderung des Brechungsindex durch Auslaugprozesse erfolgen. Solche Verfahren verwendet man zur Reflexverminderung von Glasoberflächen. Dabei werden in einer wässrigen Lösung geeigneter Substanzen dem Glas Bestandteile entzogen, so daß eine wohldefinierte Schicht mit vermindertem Brechungsindex entsteht. Solche Prozesse sind beispielsweise beschrieben in der DE-PS 821 828 oder in dem Buch von Frischat « Ionic Diffusion in Oxide Glasses » Seite 88ff.

Der Wellenleiter wird auf diese Weise von dem unveränderten Material der aufgebrachten Schicht gebildet. Der Brechungsindex der Umgebung des Wellenleiters wird vermindert und zwar vorzugsweise auf einen Wert, der ungefähr dem Brechungsindex des Substrats entspricht.

Durch die Verminderung des Brechungsindex in einer Oberflächenschicht der ersten Bereiche wird der Wellenleiter mit höherem Brechungsindex allseitig von Material mit vermindertem Brechungsindex umgeben. Es braucht dazu nicht eine weitere Glasschicht aufgebracht zu werden.

Die hierbei angewandten Auslaugprozesse bewirken außerdem sehr wirksame Selbstheilungseffekte auf durch Mikrorisse gestörte Glasoberflächen, wodurch die Dämpfung der so entstehenden Wellenleiter weiter vermindert wird.

## Kurze Beschreibung der Zeichnungen

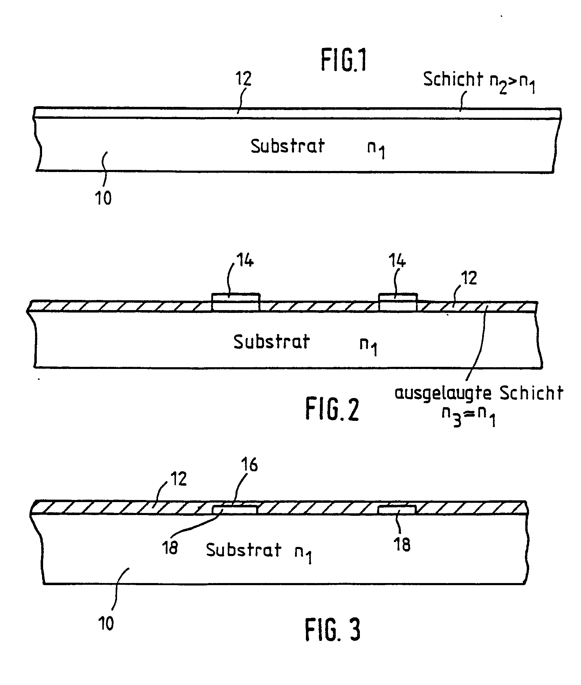

Ein Ausführungsbeispiel der Erfindung ist nachstehend unter Bezugnahme auf die zugehörigen Zeichnungen näher erläutert, welche in Figuren 1 bis 3 in einem Schnitt durch das Substrat die verschiedenen Verfahrensschritte zeigen.

## Bester Weg zur Ausführung der Erfindung

Mit 10 ist das Substrat bezeichnet, das einen Brechungsindex $n_1$ besitzt. Auf das Substrat 10 wird in einem ersten Verfahrensschritt eine Schicht 12 aus einem Material mit einem gegenüber dem Substrat 10 erhöhten Brechungsindex $n_2$ aufgebracht, wie in Fig. 1 dargestellt ist. Auf diese Schicht 12 wird dann in einem zweiten Schritt eine Maske 14 aufgebracht, welche die Bereiche der zu erzeugenden Strukturen (Wellenleiter) abdeckt. Daraufhin wird der Brechungsindex der Schicht 12 in den Bereichen außerhalb der Maske durch einen Auslaugprozeß vermindert, so daß er etwa dem Brechungsindex $n_1$ des Substrats entspricht. Dieser Schritt ist in Fig. 2 angedeutet. Wie in Fig. 3 dargestellt ist, wird anschließend die Maske 14 entfernt. Die dann erscheinende Oberfläche der Schicht 12 wird daraufhin einem weiteren Auslaugprozeß ausgesetzt, wodurch der Brechungsindex in einer gegenüber der Dicke der Glasschicht 12 dünnen Oberflächenschicht auch in den Bereichen vermindert wird, die vorher durch die Maske abgedeckt waren. Auf diese Weise entstehen Wellenleiter 18 als Bereiche von gegenüber der Umgebung erhöhtem Brechungsindex $n_2$, die allseitig von Material mit einem geringeren Brechungsindex etwa $n_1$ umgeben sind.

## Beispiel

Das Substrat 10 ist eine Scheibe aus Glas der Type BK7 der Firma Schott. Auf dieses Substrat wird eine Schicht von etwa 0,3 bis 0,5 μm aus Borkronglas mit einem gegenüber dem Glas BK7 um etwa 2 % erhöhten Brechungsindex durch Sputtern aufgebracht. Das Aufbringen von Schichten durch Sputtern ist eine bekannte Technik und daher nicht im einzelnen beschrieben. Es wird dabei das aufzubringende Material in einer Gasentladung durch Argonionen im Vakuum verdampft und schlägt sich auf einer Oberfläche, auf der das Material aufgebracht werden soll, nieder. Die Maske 14 wird photolithographisch aus Aluminium hergestellt. Die Verminderung des Brechungsindex erfolgt durch Auslaugen der Glasschicht 12 mittels einer neutralen Lösung, also einer Lösung mit dem PHWert 7. Eine neutrale Lösung wird gewählt, weil die meisten Gläser durch Säuren oder Laugen irgendwie angreifbar sind. Das Auslaugen könnte mit destilliertem Wasser erfolgen. Üblicherweise werden jedoch bestimmte wässrige Lösungen verwendet, wie beispielsweise in der erwähnten DE-PS 821 828 beschrieben sind.

Mit solchen Lösungen erfolgt dann auch das Auslaugen der Schicht 16 gemäß Fig. 3.

## Patentansprüche

1. Verfahren zur Herstellung von integriert optischen Strukturen in Glas mit den Verfahrensschritten ;

(a) Beschichten eines Substrats (10) mit einer Glasschicht (12), deren Brechungsindex ($n_2$) höher ist als der des Substrats (10),

(b) Aufbringen einer Maske (14) auf diese Glasschicht (12), wobei diese Maske (14) auf vorgegebene erste Bereiche der Oberfläche der Glasschicht (12), die dem herzustellenden Wellenleiter entsprechen, abdeckt und die übrigen, zweiten Bereiche dieser Oberfläche freiläßt, und

(c) Behandlung der Glasschicht (12) in den besagten zweiten Bereichen,
dadurch gekennzeichnet, daß

(d) die Behandlung der Glasschicht (12) in den zweiten Bereichen eine Behandlung zur Verminderung des Brechungsindex der im übrigen mechanisch unveränderten Glasschicht (12) ist,

(e) nach der Behandlung der zweiten Bereiche die Maske (14) entfernt wird und

(f) anschließend eine weitere Behandlung zur Verminderung des Brechungsindex in einer gegenüber der Dicke der Glasschicht (12) dünnen Oberflächenschicht der ersten Bereiche stattfindet.

2. Verfahren nach Anspruch 1, dadurch gekennzeichnet, daß die Verminderung des Brechungsindex durch Auslaugen erfolgt.

3. Verfahren nach Anspruch 2, dadurch gekennzeichnet, daß das Auslaugen mittels einer neutralen Lösung erfolgt.

4. Verfahren nach einem der Ansprüche 1 bis 3, dadurch gekennzeichnet, daß die Verminderung des Brechungsindex auf einen Wert erfolgt, der etwa gleich dem Brechungsindex ($n_1$) des Substrats (10) ist.

5. Verfahren nach Anspruch 1, dadurch gekennzeichnet, daß die Maske (14) photolitographisch aus Aluminium hergestellt wird.

## Claims

1. Method of making integrated optical structures in glass, comprising the method steps of :

(a) coating a substrate (10) with a glass layer (12), the refractive index ($n_2$) of which is higher than that of the substrate (10),

(b) applying a mask (14) to this glass layer (12), the mask (14) covering predetermined first areas of the surface of the glass layer (12), which correspond to the waveguide to be made and leaving the remaining second areas of this surface exposed,

(c) treating the glass layer (12) in said second areas, characterized in that

(d) the treatment of the glass layer (12) in the second areas is a treatment for decreasing the refractive index in the glass layer (12) which for the rest is mechanically unchanged,

(e) the mask (14) is removed after the second areas habe been treated and

(f) subsequently a further treatment is effected in order for decrease the refractive index in a surface layer of the first areas thin as compared to the thickness of the glass layer (12).

2. Method as set forth in claim 1, characterized in that the decreasing of the refractive index is made by leaching out.

3. Method as set forth in claim 2, characterized in that the leaching out is made by means of a neutral solution.

4. Method as set forth in one of the claims 1 to 3, characterized in that the decreasing of the refractive index is made down to a value which approximately is the same as the refractive index ($n_1$) of the substrate (10).

5. Method as set forth in claim 1, characterized in that the mask (14) is made photolithographically from aluminum.

## Revendications

1. Procédé pour la fabrication de structures optiques intégrées dans du verre, avec les étapes de procédé:

(a) Couvrir un substrat (10) d'une couche de verre (12), dont l'indice de réfraction ($n_2$) est plus élevé que celui du substrat (10),

(b) Appliquer un masque (14) sur cette couche de verre (12), ce masque (14) couvrant des premières zones de la surface de la couche de verre (12) correspondant au guide d'ondes à établir, et laissant libre les autres, secondes zones de cette surface, et

(c) Traitement de la couche de verre (12) dans lesdites secondes zones, caractérisé par le fait que

(d) le traitement de la couche de verre (12) dans les secondes zones est un traitement pour la réduction de l'indice de réfraction de la couche de verre (12) pour le reste mécaniquement inchangée,

(e) après le traitement des secondes zones le masque (14) est enlevé, et

(f) ensuite, un autre traitement pour la réduction de l'indice de réfraction est effectué dans une couche de surface des premières zones, qui, par rapport à l'épaisseur de la couche de verre (12), est fine.

2. Procédé selon la revendication 1, caractérisé par le fait que la réduction de l'indice de réfraction est effectuée par macérage.

3. Procédé selon la revendication 2, caractérisé par le fait que le macérage est effectué au moyen d'une solution neutre.

4. Procédé selon l'une des revendications 1 à 3, caractérisé par le fait que la réduction de l'indice de réfraction est effectuée à une valeur qui est approximativement égale à l'indice de réfraction ($n_1$) du substrat (10).

5. Procédé selon la revendication 1, caractérisé par le fait que le masque (14) est fabriqué photolitographiquement en aluminium.

## FIG.1

12

Schicht $n_2 > n_1$

Substrat $n_1$

10

## FIG.2

14     14     12

Substrat $n_1$

ausgelaugte Schicht
$n_3 \approx n_1$

16

12

18   Substrat $n_1$    18

10

## FIG. 3